# EUROPEAN PATENT APPLICATION

(11) **EP 4 797 065 A1**
(43) Date of publication of application: **26.08.2026**
(21) Application number: 24894395.3
(22) Date of filing: 24.10.2024
(51) Int. Cl.: G06F 3/06, G06F 16/11, G06N 3/08, G06N 3/04

(54) **ELECTRONIC DEVICE, METHOD, AND NON-TRANSITORY COMPUTER-READABLE RECORDING MEDIUM FOR ADJUSTING CAPACITY BETWEEN PARTITIONS**

(30) Priority: 20.11.2023 KR 20230161246; 12.12.2023 KR 20230180193
(71) Applicant: Samsung Electronics Co., Ltd., Suwon-si, Gyeonggi-do 16677 (KR)
(72) Inventor: KANG, Yunji, Suwon-si Gyeonggi-do 16677 (KR); SEO, Sungjong, Suwon-si Gyeonggi-do 16677 (KR); WOO, Hobin, Suwon-si Gyeonggi-do 16677 (KR); LEE, Woojoong, Suwon-si Gyeonggi-do 16677 (KR)
(74) Representative: Nederlandsch Octrooibureau
(86) International application number: PCT/KR2024/016315
(87) International publication number: WO 2025/110501

(57) **Abstract**

An electronic device is disclosed. The electronic device may comprise a file system for managing a non-volatile memory area with a first partition and a second partition. A first memory area having a first capacity in the non-volatile memory area may be assigned to the first partition, and a second memory area having a second capacity in the non-volatile memory area may be assigned to the second partition. The electronic device may identify an available capacity in the first memory area assigned to the first partition. The electronic device may assign a partial area of the first memory area to the second partition via the file system on the basis that the available capacity is greater than or equal to a designated capacity. A capacity of the partial memory area assigned to the second partition may be reduced by a ratio of a second cell level of the second memory area to a first cell level.

## Description

### [Technical Field]

The following descriptions relate to an electronic device, a method, and a non-transitory computer-readable recording medium for adjusting a capacity between partitions.

### [Background Art]

A host (e.g., a smartphone) of a universal flash storage (UFS) may communicate with a storage device (e.g., a solid state drive (SSD)) through a predetermined interface. The host may perform various management operations on the storage device. The host may use various commands defined by the predetermined interface to perform a management operation on the storage device.

### [Disclosure]

### [Technical Solution]

An electronic device is disclosed. The electronic device may comprise a processor. The electronic device may comprise a storage device including a non-volatile memory area. The electronic device may comprise memory storing a file system for managing the non-volatile memory area into a first partition and a second partition, and instructions. The first partition may be allocated to a first memory area having a first capacity among the non-volatile memory area, and the second partition may be allocated to a second memory area having a second capacity among the non-volatile memory area. The instructions may be configured, when executed by the processor, to cause the electronic device to identify an available capacity from the first memory area allocated to the first partition. The instructions may be configured, when executed by the processor, to cause the electronic device to, based on that the available capacity is greater than or equal to a specified capacity, allocate a partial area from the first memory area to the second partition through the file system. A capacity of the partial area allocated to the second partition may be reduced by a ratio of a second cell level to a first cell level.

A method is disclosed. The method may be executed by an electronic device including memory including a storage device including a non-volatile memory area, and storing a file system for managing the non-volatile memory area into a first partition and a second partition. The method may comprise identifying an available capacity from first memory area allocated to the first partition. The method may comprise, based on that the available capacity is greater than or equal to a specified capacity, allocating a partial area from the first memory area to the second partition through the file system. A capacity of the partial area allocated to the second partition may be reduced by a ratio of a second cell level of the second memory area to a first cell level.

A non-transitory computer readable storage medium is disclosed. The non-transitory computer readable storage medium may store a program including instructions. The instructions may be configured, when executed by a processor of an electronic device including memory including a storage device including a non-volatile memory area, and storing a file system for managing the non-volatile memory area into a first partition and a second partition, to cause the electronic device to identify an available capacity from first memory area allocated to the first partition. The instructions may be configured to, when executed by the processor, to cause the electronic device to, based on that the available capacity is greater than or equal to a specified capacity, allocate a partial area from the first memory area to the second partition through the file system. A capacity of the partial area allocated to the second partition may be reduced by a ratio of a second cell level of the second memory area to a first cell level.

### [Description of the Drawings]

FIG. 1 is a block diagram of an electronic device in a network environment according to various embodiments.
FIG. 2 is a block diagram of an electronic device according to an embodiment.
FIG. 3 is a block diagram of an electronic device according to an embodiment.
FIG. 4A illustrates an example in which an electronic device allocates all memory areas of a memory unit to a first LU.
FIG. 4B illustrates an example in which an electronic device generates a second LU through a partial memory area among a memory area allocated to a first LU.
FIG. 4C illustrates an example in which an electronic device allocates a partial memory area among a memory area allocated to a first LU to a second LU.
FIG. 4D illustrates an example in which an electronic device allocates a partial memory area among a memory area allocated to a second LU to a first LU.
FIG. 4E illustrates an example in which an electronic device generates a third LU through a partial memory area among a memory area allocated to a first LU.
FIG. 5 is a flowchart illustrating an operation of an electronic device according to an embodiment.
FIG. 6A is a flowchart illustrating an operation of an electronic device according to an embodiment.
FIG. 6B is a flowchart illustrating an operation of an electronic device according to an embodiment.
FIG. 7 is a flowchart illustrating an operation of an electronic device according to an embodiment.

### [Mode for Invention]

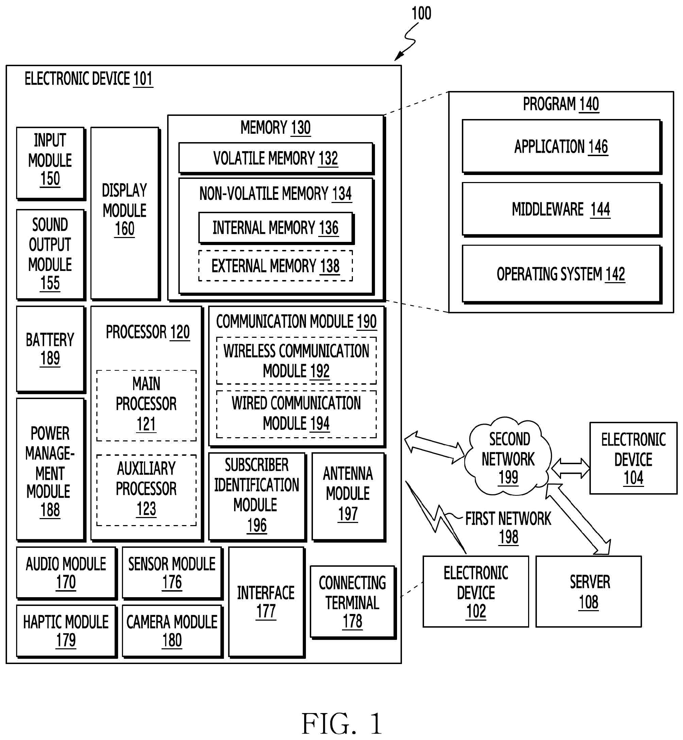

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

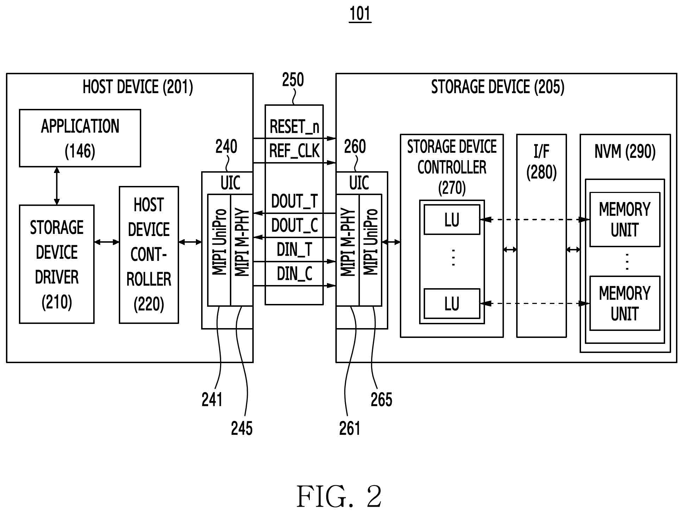

FIG. 2 is a block diagram of an electronic device 101 according to an embodiment.

Referring to FIG. 2, the electronic device 101 may include a host device 201 and a storage device 205. The host device 201 and the storage device 205 may be electrically connected to each other through an interface 250. In an embodiment, the electronic device 101 may comply with a universal flash storage (UFS) standard announced by a joint electron device engineering council (JEDEC). The host device 201 and the storage device 205 of FIG. 2 may be included in one package (or one module). However, it is not limited thereto. The host device 201 and the storage device 205 of FIG. 2 may be included in different packages (or different modules).

In an embodiment, the host device 201 may be included in the processor 120 of FIG. 1. In an embodiment, the host device 201 may include an application 146, a storage device driver 210, a host device controller 220, and a UFS interconnection (UIC) layer 240. Hereinafter, the UFS interconnection (UIC) layer 240 may be referred to as a UIC layer 240.

In an embodiment, the application 146 may refer to a program that desires communication with the storage device 205 in order to use a function of the storage device 205. The application 146 may transmit an input-output request (IOR) to the storage device driver 210 for input and output for the storage device 205. The input-output request (IOR) may include a read request, a write request, and/or a discard request of data. However, it is not limited thereto.

In an embodiment, the storage device driver 210 may manage the host device controller 220 through a UFS-host controller interface (HCI). The storage device driver 210 may convert an input-output request generated by the application 146 into a UFS command defined by the UFS standard, and may transmit the converted UFS command to the host device controller 220. One input-output request may be converted into a plurality of UFS commands. The UFS command may be a command defined by a small computer system interface (SCSI) standard. The UFS command may also be a command dedicated to the UFS standard. However, it is not limited thereto.

In an embodiment, the host device controller 220 may transmit the UFS command converted by the storage device driver 210 to a UIC layer 260 of the storage device 205 through the UIC layer 240 and the interface 250.

In an embodiment, the UIC layer 240 on a side of the host device 201 may include a mobile industry processor interface (MIPI) M-PHY 245 and a MIPI unified protocol (UniPro) 241. The UIC layer 260 on the side of the storage device 205 may include a MIPIM-PHY 265 and a MIPI UniPro 261.

In an embodiment, the interface 250 may be an interface based on the UFS standard. However, it is not limited thereto. For example, the interface 250 may be an interface based on double data rate (DDR), DDR2, DDR3, DDR4, DDR5, DDR6, low power DDR (LPDDR), a universal serial bus (USB), multimedia card (MMC), embedded MMC (eMMC), peripheral component interconnection (PCI), PCI-express (PCI-E), advanced technology attachment (ATA), Serial-ATA, Parallel-ATA, SCSI, enhanced small disk interface (ESDI), integrated drive electronics (IDE), Firewire, and/or nonvolatile memory express (NVMe).

In an embodiment, the interface 250 may include a line transmitting a reference clock (REF_CLK), a line transmitting a hardware reset signal (RESET_n) for the storage device 205, a pair of lines transmitting a differential input signal pair (DIN_T and DIN_C), and a pair of lines transmitting a differential output signal pair (DOUT_T and DOUT_C).

According to an embodiment, the interface 250 may also be referred to as interfacing circuitry.

In an embodiment, the storage device 205 may be included in the memory 130 (or the non-volatile memory 134) of FIG. 1. In an embodiment, the storage device 205 may include the UIC layer 260, a storage device controller 270, an interface 280, and a non-volatile memory (NVM) 290.

In an embodiment, the storage device 205 may be included in the electronic device 101 in a state physically divided from the host device 201 (or, the processor 120). The storage device 205 may be included in the electronic device 101 by being mounted in the same package as the host device 201 (or, the processor 120). The storage device 205 may be a solid state device (SSD) or a memory card detachable from other components of the electronic device 101 through the interface 250.

In an embodiment, the storage device 205 may be a device to which a standard protocol according to UFS, eMMC, or NVMe is applied. However, it is not limited thereto.

In an embodiment, the storage device controller 270 and the NVM 290 may be connected to each other through the interface 280.

In an embodiment, the storage device controller 270 of the storage device 205 may control an overall operation of the storage device 205. The storage device controller 270 may manage the NVM 290 through a logical unit LU that is a logical data storage unit. In an embodiment, the logical unit may also be referred to as a partition. The storage device controller 270 may include a flash translation layer (FTL). The storage device controller 270 may convert a logical data address (e.g., a logical block address (LBA)) delivered from the host device 201 into a physical data address (e.g., a physical block address (PBA)) by using address mapping information of the FTL. In the electronic device 101, a logical block for storing user data (user data) may have a size of a predetermined range. For example, a minimum size of the logical block may be set to 4 Kbyte.

In an embodiment, when a command from the host device 201 is inputted to the storage device 205 through the UIC layer 260, the storage device controller 270 may perform an operation according to the inputted command, and when the operation is completed, may transmit a completion response to the host device 201.

In an embodiment, in a case that the host device 201 intends to write user data to the storage device 205, the host device 201 may transmit a data write command to the storage device 205. When a response that the storage device 205 is ready-to-transfer for receiving the user data is received from the storage device 205, the host device 201 may transmit the user data to the storage device 205. The storage device controller 270 may write the received user data to a selected location of the NVM 290 based on the address mapping information of the FTL.

In an embodiment, in a case that the host device 201 intends to read user data stored in the storage device 205, the host device 201 may transmit a data read command to the storage device 205. The storage device controller 270 that has received the command may read the user data from the NVM 290 based on the data read command, and may transmit the read user data to the host device 201.

In an embodiment, the NVM 290 may include one or more memory units. The one or more memory units may be a NAND flash memory of a two dimensional (2D) structure. The one or more memory units may be a vertical (V)-NAND flash memory of a three dimensional (3D) structure. However, it is not limited thereto.

In an embodiment, each of the one or more memory units may include a memory cell array. The memory cell array may include a two dimensional memory cell array or a three dimensional memory cell array. The memory cell array may include a plurality of memory cells. Each of the plurality of memory cells may store information of a specified number of bits. Each of the plurality of memory cells may be classified as a single level cell (SLC), a multi level cell (MLC), a triple level cell (TLC), or a quadruple level cell (QLC) according to the number of bits stored.

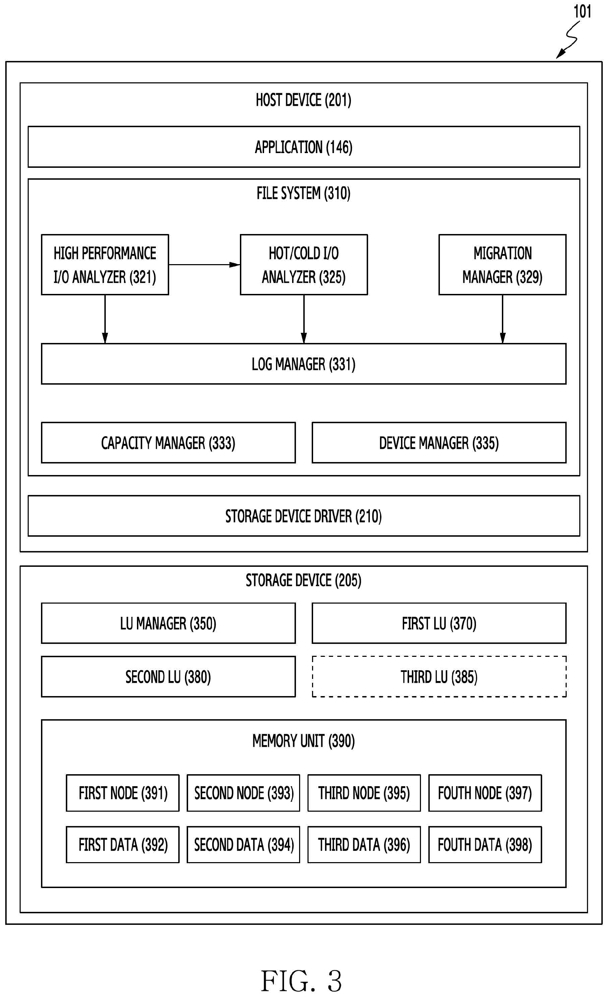

FIG. 3 is a block diagram of an electronic device 101 according to an embodiment.

FIG. 3 may be described with reference to FIG. 1 and FIG. 2.

Referring to FIG. 3, an electronic device 101 may include a host device 201 and a storage device 205.

In an embodiment, the host device 201 may include an application 146, a file system 310, and a storage device driver 210.

In an embodiment, the application 146 may correspond to the application 146 of FIG. 1. In an embodiment, the application 146 may generate a command (or a request) associated with a virtual LU (a first LU 370 and/or a second LU 380). For example, the application 146 may request a read of data stored in a memory unit 390. For example, the application 146 may request a write of data to the memory unit 390. However, it is not limited thereto.

In an embodiment, the application 146 may generate a command (or a request) that may be processed in the first LU 370 and/or the second LU 380 through an application programming interface (API) provided by the file system 310. In an embodiment, the command (or the request) may include an input-output request (IOR) for input and output for the first LU 370 and/or the second LU 380 of the storage device 205. The input-output request (IOR) may include a read request, a write request, and/or a discard request of data. The input-output request (IOR) may include information regarding a recording location (e.g., the first LU 370 and/or the second LU 380) of the write-requested data and/or a storage period. In an embodiment, the command (or the request) may include generation, capacity allocation, and/or capacity allocation release of a logical unit (or a partition).

In an embodiment, the application 146 may transmit the command (or the request) generated based on an API to the file system 310.

In an embodiment, the file system 310 may be a structure or software used to store data in the storage device 205. In an embodiment, the file system 310 may provide an API for an input-output request (IOR) and/or generation, capacity allocation, and/or capacity allocation release of a logical unit (or a partition) to the application 146.

In an embodiment, the file system 310 may manage two or more logical units 370, 380, and 385. In an embodiment, the file system 310 managing a logical unit may refer to structuring files stored in a storage space of the memory unit 390 allocated to the logical unit. In an embodiment, the file system 310 managing a logical unit may refer to connecting the logical unit (or the partition) to a specific location (or an address) of a directory. In an embodiment, the file system 310 may manage such that usage amounts of the two or more logical units 370, 380, and 385 do not exceed a marked capacity of the memory unit 390. In an embodiment, the file system 310 may manage such that a sum of capacities allocated to the first LU 370 and the second LU 380 does not exceed a capacity of the memory unit 390.

In an embodiment, the file system 310 may be a log structured file system (LFS). In an embodiment, the log structured file system may be a file system that manages the memory unit 390 of the storage device 205 as one contiguous area. In an embodiment, the log structured file system may sequentially record data (e.g., user data and/or meta data) in the memory unit 390 of the storage device 205. In an embodiment, the file system 310 may be a flash friendly file system (F2FS). In an embodiment, the F2FS may be a file system that manages the memory unit 390 of the storage device 205 as one contiguous area. In an embodiment, the F2FS may sequentially record data (e.g., user data and/or meta data) in the memory unit 390 of the storage device 205. In an embodiment, the F2FS may include a random write area and a sequential write area. In an embodiment, the random write area may allow over write. In an embodiment, the random write area may record address information of a node block recorded in the sequential write area. In an embodiment, the sequential write area may not allow over write. In an embodiment, the sequential write area may record data (e.g., user data and/or meta data). In an embodiment, the sequential write area may record a node block (or meta data) and a data block (or user data).

In an embodiment, the file system 310 may include a high performance input/output (I/O) analyzer 321, a Hot/Cold I/O analyzer 325, a migration manager 329, a log manager 331, a capacity manager 333, and a device manager 335.

Hereinafter, an operation of the file system 310 storing data in the memory unit 390 through the high performance I/O analyzer 321 and/or the Hot/Cold I/O analyzer 325 is described.

In an embodiment, the file system 310 may obtain a write request from the application 146. In an embodiment, the file system 310 may obtain the write request generated based on the API.

In an embodiment, the file system 310 may store (or record) data in the memory unit 390 based on the write request. In an embodiment, based on that a partition is specified in the write request, the file system 310 may store (or record) data in the specified partition (e.g., the first LU 370 or the second LU 380). In an embodiment, the file system 310 may store (or record) data in a partition identified based on a priority of a file (or data) requested to be written based on that a partition is not specified in the write request.

In an embodiment, the file system 310 may identify a first priority of the data requested to be written through the high performance I/O analyzer 321. In an embodiment, the file system 310 may identify the first priority for determining a partition to record the data requested to be written through the high performance I/O analyzer 321.

In an embodiment, the first priority may be identified by input/output performance required for the data requested to be written. For example, data for a function (e.g., a swap function) requiring responsiveness may have the highest first priority. In an embodiment, the swap function may refer to an operation of storing (or swap-out) data stored in a volatile memory 132 of memory 130 in the storage device 205, or storing (or swap-in) data stored in the storage device 205 in the volatile memory 132. In a case that a response speed of the swap function is slow, performance of the application 146 requiring a free space of the volatile memory 132 may be degraded. In a case that the response speed of the swap function is slow, as a read speed of data swap-out from the volatile memory 132 to the storage device 205 is degraded, the performance of the application 146 requiring the data may be degraded. Accordingly, the data for the swap function requiring the responsiveness may have the highest first priority.

In an embodiment, the first priority may be determined based on a type of a file, a frequency of reading of the file, a type (e.g., fsync(), sync()) of a write request of the file, a frequency of a specified write request (e.g., fsync(), sync()), and whether atomicity of a transaction is guaranteed. In a case of the specified write request (e.g., fsync()), since the specified write request is an operation in which it should be guaranteed that the data requested to be written is entirely recorded in the storage device 205, by increasing a response speed of the specified write request (e.g., synchronous input/output) (e.g., fsync()), an overall response speed of the storage device 205 may be improved. Accordingly, data (or a file) in which the specified write request (e.g., synchronous input/output) (e.g., fsync()) frequently occurs needs to be stored in a partition in which high performance (or high speed write and read) may be guaranteed, and a priority of the data (or the file) in which the specified write request (e.g., fsync()) frequently occurs may be set high. In an embodiment, data having a specified extension may have a high first priority. In an embodiment, data regarding a binary (e.g., odex, or vdex) for execution of the application 146 may have a high first priority in order to improve loading response time performance of the application. Data included in a function (e.g., fsync(), sync()) for guaranteeing that data is entirely recorded in the storage device may have a high first priority. Data having a high frequency of an input/output request (IOR) may have a high first priority. Data included in the transaction for which guaranteeing of the atomicity is required may have a high first priority. According to an embodiment, the atomicity should be guaranteed for the transaction (e.g., a transaction for writing) of a database. For example, the atomicity may refer to that results of all operations associated with the transaction are entirely reflected in the database, or are not reflected at all. With respect to the database, a file (or data) for input (or output) should be processed so that all is written or none is written without interruption of the input (or output) during input (or output) or loss of the file based on the atomicity. Accordingly, the data (or the file) for which the atomicity should be guaranteed needs to be stored in the partition in which the high performance (or the high speed write and read) may be guaranteed, and a priority of the data (or the file) for which the atomicity should be guaranteed may be set high. For example, a write request for the database for which guaranteeing of the atomicity in the transaction is required may have a high first priority. In an embodiment, the atomicity of the transaction may refer to a state in which operation results of the transaction are all recorded in the database, or are not recorded at all in the database.

In an embodiment, the first priority may be identified by a priority specified in a write request. In an embodiment, the first priority may be identified by required performance of the application 146 associated with the write request. In an embodiment, the first priority may be identified by a priority (explicitly) set by the application 146 for the data requested to be written. For example, the application 146 may transmit a write request in which the first priority is specified to the file system 310.

In an embodiment, the file system 310 may determine to store data having a first priority equal to or greater than a reference first priority in a partition (e.g., the second LU 380) of high performance. In an embodiment, the file system 310 may determine to store data having a first priority less than the reference first priority in a partition (e.g., the first LU 370) of normal performance. However, it is not limited thereto.

In an embodiment, the file system 310 may identify a second priority of the data requested to be written based on determining to store the data requested to be written in the partition (e.g., the first LU 370) of the normal performance.

In an embodiment, the file system 310 may identify the second priority of the data requested to be written through the Hot/Cold I/O analyzer 325. In an embodiment, the second priority may be classified according to an attribute of the data. In an embodiment, according to the second priority, the data may be classified into hot data, warm data, or cold data. In an embodiment, according to an access frequency, the data requested to be written may be classified into the hot data having a high access frequency, the warm data or the cold data having a relatively low access frequency. In an embodiment, the data requested to be written may be classified into the hot data, the warm data, or the cold data according to a lifetime of a file.

In an embodiment, the file system 310 may store the data requested to be written in a partition determined according to the first priority and/or the second priority. However, it is not limited thereto. In an embodiment, the file system 310 may store the data requested to be written in another partition based on an available capacity of the determined partition. In an embodiment, the available capacity may refer to a capacity of a memory area in which a file (or data) is not stored among memory areas allocated to each of partitions.

Hereinafter, an operation of the file system 310 migrating data among LUs 370, 380, and 385 through the migration manager 329 is described.

In an embodiment, in the file system 310, a file to be stored (or for writing) may determine a partition to store the file according to a priority (e.g., the first priority and/or the second priority). In an embodiment, before recording (or storing) the file in the determined partition, the file system 310 may check whether a free space exists in the partition. In an embodiment, in a case that the free space in the determined partition is insufficient, the file system 310 may select one of migration or storing in another partition. For example, in a case that the determined partition is a high performance partition (e.g., the second LU 380), and the free space in the high performance partition (e.g., the second LU 380) is insufficient, the file system 310 may record (or store) the file in a normal performance partition (e.g., the first LU 370) without the migration, since a cost (or resource consumption) of the migration from the high performance partition to the normal performance partition (e.g., the first LU 370) is high. For another example, in a case that the determined partition is the normal performance partition and the free space in the normal performance partition is insufficient, the file system 310 may select one of migration or storing in another partition. In an embodiment, the file system 310 may select one of the migration or storing in the another partition according to a priority. For example, in a case that a response speed of a file is important, the file system 310 may store the file in the high performance partition instead of the migration. Thereafter, the file system 310 may migrate the file stored in the high performance partition to the normal performance partition. For example, in a case that the response speed of the file is not important, the file system 310 may store the file in the normal performance partition after the migration.

In an embodiment, the file system 310 may migrate through the migration manager 329. In an embodiment, based on that an available capacity of any one LU among the LUs 370, 380, and 385 is equal to or less than a specified capacity, the file system 310 may perform migration for any one LU through the migration manager 329. In an embodiment, the migration may refer to storing data stored in any one LU among the LUs 370, 380, and 385 in another LU. In an embodiment, the migration for any one LU may include storing data stored in any one LU in the another LU in order to secure an available capacity of any one LU. In an embodiment, the migration for any one LU may include deleting the data stored in any one LU in order to secure the available capacity of any one LU.

In an embodiment, the file system 310 may identify an available capacity of each of the LUs 370, 380, and 385. In an embodiment, the file system 310 may identify that an available capacity of any one LU among the LUs 370, 380, and 385 is equal to or less than the specified capacity. For example, the file system 310 may identify that an available capacity of the first LU 370 is equal to or less than the specified capacity. For example, the file system 310 may identify that an available capacity of the second LU 380 is equal to or less than the specified capacity. According to an embodiment, the specified capacity for the first LU 370 and the specified capacity for the second LU 380 may be identical or different from each other.

In an embodiment, the file system 310 may identify data to migrate based on that an LU equal to or less than the specified capacity is identified. In an embodiment, the data to migrate may be selected based on the first priority of the data identified through the high performance I/O analyzer 321 and/or the second priority of the data identified through the Hot/Cold I/O analyzer 325.

In an embodiment, the file system 310 may identify, through the migration manager 329, data having the highest first priority among the data stored in the first LU 370 as data to migrate. In an embodiment, the file system 310 may identify, through the migration manager 329, data having the lowest first priority among the data stored in the second LU 380 as data to migrate.

In an embodiment, the file system 310 may identify, through the migration manager 329, data having the highest access frequency during a specified time among the data stored in the first LU 370 as data to migrate.

In an embodiment, the file system 310 may identify, through the migration manager 329, data having the lowest access frequency during the specified time among the data stored in the second LU 380 as data to migrate.

In an embodiment, the file system 310 may identify data to migrate having a size such that an available capacity of any one LU becomes equal to or greater than a specified capacity. For example, the file system 310 may identify, in the first LU 370, data to migrate having a size such that an available capacity of the first LU 370 becomes equal to or greater than the specified capacity. For example, the file system 310 may identify, in the second LU 380, data to migrate having a size such that an available capacity of the second LU 380 becomes equal to or greater than the specified capacity.

In an embodiment, the file system 310 may perform migration through the migration manager 329 based on the identified data. In an embodiment, the file system 310 may execute the migration during an idle time through the migration manager 329. In an embodiment, the file system 310 may execute a thread associated with the migration manager 329 in a background. The thread being executed in the background may refer to that the migration manager 329 is not continuously executed but is executed at a specific time (e.g., the idle time).

Hereinafter, an operation of the file system 310 managing a log of data 392, 394, 396, and 398 and/or nodes 391, 393, 395, and 397 stored in the memory unit 390 through the log manager 331 is described.

In an embodiment, the file system 310 may manage a log area through the log manager 331. In an embodiment, the file system 310 may distinguish a different number of log areas for each of the LUs 370, 380, and 385 through the log manager 331.

In an embodiment, the file system 310 may distinguish a type of a file stored in the first LU 370 according to a lifetime of the file through the log manager 331. In an embodiment, the file system 310 may distinguish the first LU 370 into a plurality of log areas (e.g., the first node 391, the first data 392, the second node 393, the second data 394, the third node 395, or the third data 396) through the log manager 331. In an embodiment, the file system 310 may distinguish the first LU 370 into six log areas for hot data (e.g., the first data 392), a hot node (e.g., the first node 391), warm data (e.g., the second data 394), a warm node (e.g., the second node 393), cold data (e.g., the third data 396), and a cold node (e.g., the third node 395) through the log manager 331, in order to improve performance of garbage collection (GC) of the first LU 370. In an embodiment, the hot data, the warm data, or the cold data may be distinguished according to required response performance (or a read speed, or a write speed). In general, more computing resources (e.g., resources of a processor 120) and faster input/output may be required for the hot node (e.g., the first node 391). Next, more disk space per node may be required for the warm node (e.g., the second node 393) and/or the cold node (e.g., the third node 395) than for the hot node (e.g., the first node 391), but fewer computing resources (e.g., resources of the processor 120) and relatively slower input/output may be required.

In an embodiment, the file system 310 may distinguish the high performance second LU 380 into high performance logs (e.g., the fourth node 397 and the fourth data 398) through the log manager 331. For example, the file system 310 may distinguish the high performance second LU 380 into two log areas for data (e.g., the fourth data 398) and a node (e.g., the fourth node 397) through the log manager 331.

In an embodiment, each of log areas may be divided in each of the LUs 370, 380, and 385. Each of the log areas being divided may refer to that data of a specific type is stored only in a specified log area. For example, the hot node (e.g., the first node 391) may be stored only in a log area for the hot node (e.g., the first node 391). In an embodiment, as each of the areas is divided in each of the LUs 370, 380, and 385, the file system 310 may enable multi-head logging. In an embodiment, the hot node (e.g., the first node 391) may be a node block of directories. In an embodiment, the hot data (e.g., the first data 392) may be a dentry block. In an embodiment, the dentry block may record information for linking an i-node and a file. In an embodiment, the warm node (e.g., the second node 393) may be a node block of files. In an embodiment, the warm data (e.g., the second data 394) may be a data block by a user. In an embodiment, the cold node (e.g., the third node 395) may be an indirect node block. In an embodiment, the cold data (e.g., the third data 396) may be a multimedia data block. However, it is not limited thereto.

In an embodiment, the file system 310 may store data in log areas corresponding to a write request among the divided log areas through the log manager 331. For example, in response to the data according to the write request being stored in the first LU 370 and being identified as hot data, the file system 310 may store the data according to the write request in a log area for the hot data. For example, in response to the data according to the write request being stored in the first LU 370 and being identified as hot data, the file system 310 may store metadata of the data in a log area for a hot node associated with the hot data. For example, in response to data according to the write request being identified as being stored in the second LU 380, the file system 310 may store the data according to the write request in a log area for data of the second LU 380. For example, in response to data according to the write request being identified as being stored in the second LU 380, the file system 310 may store metadata of the data in a log area for a node associated with the data of the second LU 380.

In an embodiment, the file system 310 may store data to migrate in log areas corresponding to migration among the divided log areas through the log manager 331. For example, in response to data according to the migration being stored in the first LU 370 and being identified as hot data, the file system 310 may store the data according to the migration in a log area for the hot data. For example, in response to the data according to the migration being stored in the first LU 370 and being identified as the hot data, the file system 310 may store metadata of the data in a log area for a hot node associated with the hot data.

Hereinafter, an operation of the file system 310 changing an allocated capacity among the LUs 370, 380, and 385 through the capacity manager 333 is described.

In an embodiment, the file system 310 may perform operations for generation, capacity allocation, capacity allocation release, and/or removal of the LUs 370, 380, and 385 associated with the memory unit 390 through the capacity manager 333. The LUs 370, 380, and 385 being associated with the memory unit 390 may refer to that a memory area of the memory unit 390 is divided and allocated to the LUs 370, 380, and 385.

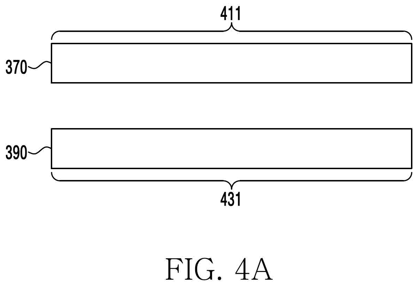

In an embodiment, an entire memory area of the memory unit 390 may be in a state allocated to the first LU 370. In an embodiment, the first LU 370 may be a partition of normal performance. A state in which the entire memory area of the memory unit 390 is allocated to the first LU 370 may be described with reference to FIG. 4A.

In an embodiment, the file system 310 may generate other LUs 380 and 385 other than the first LU 370 through the capacity manager 333. In an embodiment, the file system 310 may generate the other LUs 380 and 385 based on a generation request of an LU from the application 146. In an embodiment, the generation request of the LU may be obtained through a user interface (UI) displayed on a display (e.g., the display module 160 of FIG. 1). In an embodiment, the generation request of the LU may include information indicating performance (e.g., high performance, intermediate performance, or normal performance) of the LU to be generated. In an embodiment, the generation request of the LU may include information indicating a capacity of the LU to be generated. In an embodiment, the capacity of the LU to be generated may be equal to or less than a maximum capacity of the memory unit 390.

In an embodiment, the file system 310 may distribute a capacity (or a resource) of the memory unit 390 between the LUs 370, 380, and 385 through the capacity manager 333. For example, the capacity manager 333 may distribute the memory area of the memory unit 390 between the first LU 370 and the second LU 380.

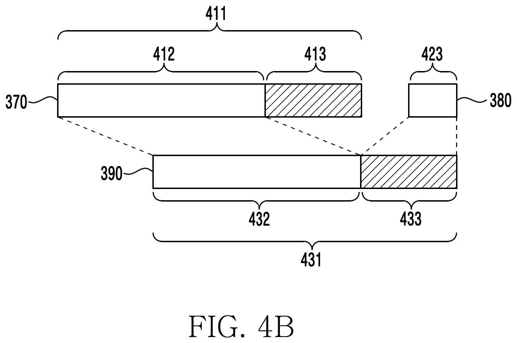

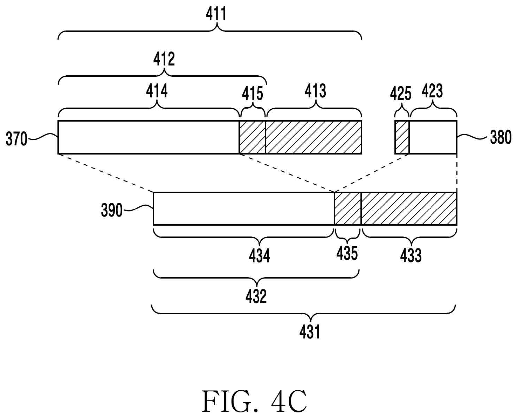

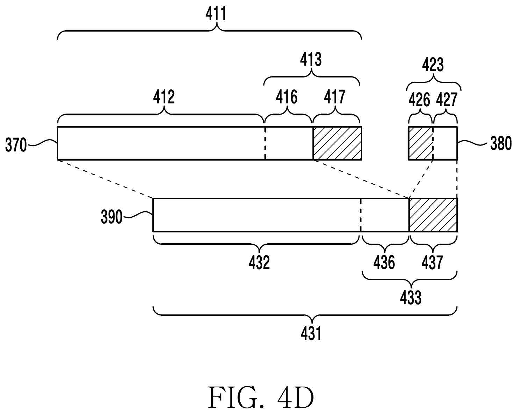

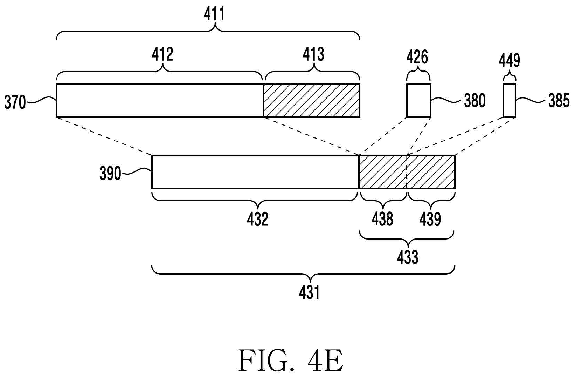

In an embodiment, the file system 310 may distribute the memory area of the memory unit 390 between the first LU 370 and the second LU 380 based on a capacity distribution request from the application 146. In an embodiment, the file system 310 may distribute the memory area between the first LU 370 and the second LU 380 based on an available capacity of at least one LU among the LUs 370, 380, and 385. An operation of distributing (or adjusting) the memory area between the first LU 370 and the second LU 380 may be described with reference to FIG. 4B, FIG. 4C, FIG. 4D, and FIG. 4E.

In an embodiment, as the memory area of the memory unit 390 is distributed between the first LU 370 and the second LU 380, an entire capacity of the memory unit 390 may be changed. For example, the entire capacity of the memory unit 390 may increase as more memory areas are allocated to a partition (e.g., the first LU 370) of the lowest performance. For example, the entire capacity of the memory unit 390 may decrease as more memory areas are allocated to a partition (e.g., the second LU 380 and/or the third LU 385) of relatively higher performance. For example, in a case that the first LU 370 operates as TLC and the second LU 380 operates as SLC, in a case that a memory area allocated to the first LU 370 is allocated to the second LU 380, the capacity of the memory area may decrease to 1/3 (or a ratio of a cell level of the SLC to a cell level of the TLC). For example, in a case that the first LU 370 operates as MLC and the second LU 380 operates as SLC, in a case that the memory area allocated to the first LU 370 is allocated to the second LU 380, the capacity of the memory area may decrease to 1/2 (or a ratio of a cell level of the SLC to a cell level of the MLC). For example, in a case that the first LU 370 operates as TLC and all memory areas of the memory unit 390 are allocated to the first LU 370, the entire capacity of the memory unit 390 may be 12 GB. For example, in a case that the first LU 370 operates as TLC, the second LU 380 operates as SLC, a half of the memory area of the memory unit 390 is allocated to the first LU 370, and a remaining half is allocated to the second LU 380, the entire capacity of the memory unit 390 may be 8 GB.

In an embodiment, as the memory area of the memory unit 390 is distributed between the first LU 370 and the second LU 380, even though the entire capacity of the memory unit 390 is changed, the file system 310 may maintain the entire capacity of the memory unit 390 displayed to the user. For example, the file system 310 may guide the user with a capacity when all memory areas of the memory unit 390 are allocated to the partition (e.g., the first LU 370) of the lowest performance as the entire capacity of the memory unit 390. Herein, guiding the entire capacity to the user may refer to displaying the display (e.g., the display module 160 of FIG. 1).

Hereinafter, an operation of the file system 310 managing logical addresses of the LUs 370, 380, and 385 through the device manager 335 is described.

In an embodiment, the file system 310 may manage performance information and/or a logical address of each of the LUs 370, 380, and 385 through the device manager 335.

In an embodiment, the performance information may include a type (e.g., a type according to the number of bits stored by a memory cell) (e.g., SLC, MLC, TLC, or QLC) of a plurality of memory cells included in a memory area allocated to each of the LUs 370, 380, and 385. However, it is not limited thereto.

In an embodiment, the logical address may be an address allocated to each of the LUs 370, 380, and 385. In an embodiment, the logical address may be mapped to a physical address of each of segments of the memory unit 390. In an embodiment, a segment may include contiguous blocks in the memory unit 390. In an embodiment, a block may have a specified first size (e.g., 4 kb). In an embodiment, the segment may have a specified second size (e.g., 2 Mb).

In an embodiment, the file system 310 may manage information on an available capacity of each of the LUs 370, 380, and 385 through the device manager 335. The available capacity may refer to a capacity in which a file is not stored among an entire capacity according to the memory area allocated to each of the LUs 370, 380, and 385.

In an embodiment, the file system 310 may map a physical address of the plurality of segments of the memory unit 390 to the logical address allocated to the LUs 370, 380, and 385 through the device manager 335. In an embodiment, according to a cell level at which the LUs 370, 380, and 385 operate, some logical addresses among the logical addresses may not be mapped to the physical addresses. In an embodiment, as the memory area is allocated to the partition (e.g., the second LU 380) of relatively high performance, some logical addresses among logical addresses set based on the partition (e.g., the first LU 370) of the lowest performance may not be mapped to the physical addresses. For example, in a case that the first LU 370 operates as TLC, the second LU 380 operates as SLC, 800 logical addresses corresponding to 800 physical addresses allocated to the first LU 370 are set, and 100 physical addresses are allocated to the second LU 380, memory cells included in the 100 physical addresses may operate from SLC to TLC. Accordingly, as it operates from SLC to TLC, 300 physical addresses may be reduced to 100 physical addresses. Further, among 300 logical addresses mapped to the 300 physical addresses, 100 logical addresses corresponding to the 100 physical addresses may be mapped, and the remaining 200 logical addresses may not be mapped to the physical addresses.

In an embodiment, the file system 310 may set logical addresses to which physical addresses are not mapped to an unused (or unusable) state through the device manager 335. In an embodiment, a write request for the logical addresses in the unused (or unusable) state may not be processed.

In an embodiment, the file system 310 may update a mapping between a physical address and a logical address according to capacity allocation among the LUs 370, 380, and 385 through the device manager 335. In an embodiment, the file system 310 may map the logical address in the unused (or unusable) state to the physical address through the device manager 335 as the memory area allocated to the first LU 370 increases. In an embodiment, as the logical address in the unused (or unusable) state is mapped to the physical address through the device manager 335, the file system 310 may change a state of the logical address from the unused (or unusable) state to a usable state.

In an embodiment, the file system 310 may process a write request through the device manager 335. In an embodiment, the file system 310 may identify a block to record data among blocks of a partition identified by the write request through the device manager 335. In an embodiment, the file system 310 may allocate the block to the partition in order to process the write request through the device manager 335. In an embodiment, the device manager 335 may record the data in the allocated block. In an embodiment, the block allocated in the partition may be a block next to a most recent block among the memory area of the memory unit 390 allocated to the partition. In an embodiment, the block allocated in the partition may be a block identified according to a sequential write order.

In an embodiment, the file system 310 may process migration through the device manager 335. In an embodiment, the file system 310 may identify a block to record data among blocks of a partition identified by the migration through the device manager 335. In an embodiment, the file system 310 may allocate a block to the partition in order to process the migration through the device manager 335. In an embodiment, the device manager 335 may record the data in the allocated block. In an embodiment, the block allocated in the partition may be a block next to a most recent block among the memory area of the memory unit 390 allocated to the partition. In an embodiment, the block allocated in the partition may be a block identified according to a sequential write order.

In an embodiment, the file system 310 may identify a capacity of the partition identified by the write request through the device manager 335. In a case that the capacity of the partition identified by the write request is equal to or less than a specified capacity, the file system 310 may record a file in another partition other than the identified partition through the device manager 335. In a case that the capacity of the partition identified by the write request is equal to or less than the specified capacity, the file system 310 may record the file in the identified partition after securing an available capacity of the identified partition through the migration, through the device manager 335. In an embodiment, in a case that the capacity of the partition identified by the write request is equal to or less than the specified capacity, the file system 310 may record the file in the another partition or record the file in the identified partition after the migration according to a state (e.g., busy, or idle) of an electronic device 101 through the device manager 335. In an embodiment, in a case that the state of the electronic device 101 is busy, the file system 310 may record the file in the another partition through the device manager 335. In an embodiment, in a case that the state of the electronic device 101 is idle, the file system 310 may record the file in the identified partition after the migration through the device manager 335.

In an embodiment, the storage device driver 210 may correspond to the storage device driver 210 of FIG. 2. In an embodiment, the storage device driver 210 may convert an input/output request (IOR) generated by the application 146 into a UFS command defined by a UFS standard.

In an embodiment, the storage device 205 may include an LU manager 350, the first LU 370, the second LU 380, and the memory unit 390. For example, the storage device 205 may correspond to the storage device 205 of FIG. 2.

In an embodiment, the LU manager 350 may process a command for generation, removal, capacity allocation, and/or capacity allocation release of an LU. For example, the LU manager 350 may process a command for generation, removal, capacity allocation, and/or capacity allocation release of a logical unit from the file system 310.

In an embodiment, the LU manager 350 may distribute a capacity (or a resource) of the memory unit 390 between LUs. For example, the LU manager 350 may distribute the memory area of the memory unit 390 between the first LU 370 and the second LU 380.

In an embodiment, the first LU 370 may correspond to a space (or a partition) of the memory area of the memory unit 390. For example, in the first LU 370, an entire memory area of the memory unit 390 may be allocated. In an embodiment, the first LU 370 may also be referred to as a first partition.

In an embodiment, the second LU 380 may be allocated with a partial memory area from the memory unit 390 allocated to the first LU 370. The second LU 380 may be an LU dependent on the first LU 370. In an embodiment, the second LU 380 may also be referred to as a second partition. According to an embodiment, the storage device 205 may further include a third LU 385 to which another partial memory area from the memory unit 390 is allocated.

In an embodiment, the memory unit 390 may be a NAND flash memory of a 2D structure. In an embodiment, in the memory unit 390, one or more memory units may be V-NAND flash memories of a 3D structure. However, it is not limited thereto.

In an embodiment, the memory unit 390 may have a capacity. In an embodiment, the capacity of the memory unit 390 may vary according to the number of bits stored by each of a plurality of memory cells of the memory unit 390. For example, in a case that each of the plurality of memory cells is SLC, MLC, or TLC, the capacity of the memory unit 390 may be 4 GB, 8 GB, or 12 GB.

As described above, the electronic device 101 may efficiently operate the memory unit 390 of one storage device 205 by using the file system 310. For example, the electronic device 101 may store a file associated with an input/output request for which responsiveness is important in a partition (e.g., an LU operating as SLC) of high performance. For example, the electronic device 101 may store a file having a low priority in a partition (e.g., an LU operating as TLC) of normal performance. Accordingly, the electronic device 101 may provide a storage environment with improved responsiveness to the user.

Hereinafter, with reference to FIG. 4A and FIG. 4B, an example in which the electronic device 101 allocates a partial memory area among the memory area allocated to the first LU 370 to the second LU 380 will be described.

FIG. 4A illustrates an example in which an electronic device 101 allocates all memory areas of a memory unit 390 to a first LU 370. FIG. 4B illustrates an example in which the electronic device 101 generates a second LU 380 through a partial memory area among a memory area allocated to the first LU 370. FIGS. 4A and 4B may be described with reference to FIG. 1, FIG. 2, and FIG. 3.

Referring to FIG. 4A, the electronic device 101 may allocate an entire memory area 431 of the memory unit 390 to the first LU 370. In an embodiment, the electronic device 101 may allocate the entire memory area 431 of the memory unit 390 to the first LU 370 such that an entire logical address space 411 of the first LU 370 corresponds to the entire memory area 431 of the memory unit 390.

In an embodiment, an electronic device 101 may generate the second LU 380 other than the first LU 370. In an embodiment, the electronic device 101 may generate the second LU 380 based on a generation request of the second LU 380 from an application (e.g., the application 146 of FIG. 1). In an embodiment, the generation request of the second LU 380 may be obtained through a UI displayed through a display (e.g., the display module 160 of FIG. 1). In an embodiment, the generation request of the second LU 380 may include information indicating performance (e.g., high performance) of the second LU 380 to be generated. In an embodiment, the generation request of the second LU 380 may include information indicating a capacity of the second LU 380 to be generated. In an embodiment, the capacity of the second LU 380 to be generated may be less than or equal to a maximum capacity of the memory unit 390. In an embodiment, the first LU 370 may be illustrated as operating as TLC, and the second LU 380 may be illustrated as operating as MLC.

Referring to FIG. 4B, the electronic device 101 may allocate a partial memory area 433 among the entire memory area 431 of the memory unit 390 to the second LU 380. In an embodiment, the electronic device 101 may allocate a partial memory area 432 among the entire memory area 431 of the memory unit 390 to the first LU 370, and allocate a remaining partial memory area 433 to the second LU 380.

In an embodiment, the electronic device 101 may set a logical address space 413 corresponding to the memory area 433 not allocated to the first LU 370 among the entire memory area 431 to an unused (or, unusable) state. In an embodiment, the electronic device 101 may set a logical address space 412 corresponding to the memory area 432 allocated to the first LU 370 among the entire memory area 431 to a usable state.

In an embodiment, the electronic device 101 may set a logical address space 423 corresponding to the memory area 433 allocated to the second LU 380 among the entire memory area 431 to a usable state.

As described above, the electronic device 101 may generate LUs having different performance to the memory unit 390 in order to efficiently operate the memory unit 390 of one storage device 205 using a file system 310. Accordingly, the electronic device 101 may provide, to a user, an LU having improved responsiveness when an available capacity is sufficient.

Hereinafter, with reference to FIG. 4C, an example in which the electronic device 101 allocates a partial memory area among the memory area allocated to the first LU 370 to the second LU 380 will be described.

FIG. 4C illustrates an example in which an electronic device 101 allocates a partial memory area among a memory area allocated to a first LU 370 to a second LU 380. FIG. 4C may be described with reference to FIG. 1, FIG. 2, FIG. 3, FIG. 4A, and FIG. 4B.

In an embodiment, the electronic device 101 may distribute a memory area 431 of a memory unit 390 between the first LU 370 and the second LU 380 based on a capacity allocation request from an application (e.g., the application 146 of FIG. 1). In an embodiment, the electronic device 101 may distribute the memory area 431 between the first LU 370 and the second LU 380 based on an available capacity of each of the first LU 370 and the second LU 380. In an embodiment, the first LU 370 may be illustrated as operating as TLC, and the second LU 380 may be illustrated as operating as MLC.

In an embodiment, the electronic device 101 may identify that an available capacity of the second LU 380 is insufficient. In an embodiment, the electronic device 101 may identify that the available capacity of the second LU 380 is less than or equal to a specified capacity.

In an embodiment, the electronic device 101 may identify that an available capacity of the first LU 370 is sufficient. In an embodiment, the electronic device 101 may identify that the available capacity of the first LU 370 exceeds a specified capacity. In an embodiment, the specified capacity for the first LU 370 and the specified capacity for the second LU 380 may be identical or may be different.

In an embodiment, the electronic device 101 may allocate, to the second LU 380, a memory area corresponding to a partial capacity among the available capacity of the first LU 370. In an embodiment, the electronic device 101 may allocate, to the second LU 380, the memory area corresponding to the partial capacity among the available capacity of the first LU 370 based on the available capacity of each of the first LU 370 and the second LU 380.

Referring to FIG. 4C, the electronic device 101 may allocate a partial memory area 435 among the memory area 432 allocated to the first LU 370 to the second LU 380. In an embodiment, the electronic device 101 may allocate a partial memory area 434 among the entire memory area 431 of the memory unit 390 to the first LU 370, and allocate remaining partial memory areas 435 and 433 to the second LU 380.

In an embodiment, the electronic device 101 may set logical address spaces 413 and 415 corresponding to memory areas 433 and 435 not allocated to the first LU 370 among the entire memory area 431 to an unused (or, unusable) state. In an embodiment, the electronic device 101 may change the logical address space 415 corresponding to the partial memory area 435 allocated to the second LU 380 from a usable state to the unused (or, unusable) state. In an embodiment, the electronic device 101 may set the logical address space 414 corresponding to the memory area 434 allocated to the first LU 370 among the entire memory area 431 to the usable state. In an embodiment, the electronic device 101 may set logical address spaces 423 and 425 corresponding to memory areas 433 and 435 allocated to the second LU 380 among the entire memory area 431 to the usable state.

As described above, the electronic device 101 may adjust a capacity between LUs having different performance to the memory unit 390 in order to efficiently operate the memory unit 390 of a storage device 205 using a file system 310. Accordingly, the electronic device 101 may provide a storage environment having improved responsiveness to a user.

Hereinafter, with reference to FIG. 4D, an example in which the electronic device 101 allocates a partial memory area among the memory area allocated to the second LU 380 to the first LU 370 will be described.

FIG. 4D illustrates an example in which an electronic device 101 allocates a partial memory area 437 among a memory area 433 allocated to a second LU 380 to a first LU 370. FIG. 4D may be described with reference to FIG. 1, FIG. 2, FIG. 3, FIG. 4A, and FIG. 4B.

In an embodiment, the electronic device 101 may distribute a memory area 431 of a memory unit 390 between the first LU 370 and the second LU 380 based on a capacity distribution request from an application (e.g., the application 146 of FIG. 1). In an embodiment, the electronic device 101 may distribute the memory area 431 between the first LU 370 and the second LU 380 based on an available capacity of each of the first LU 370 and the second LU 380. In an embodiment, the first LU 370 may be illustrated as operating as TLC, and the second LU 380 may be illustrated as operating as MLC.

In an embodiment, the electronic device 101 may identify that an available capacity of the first LU 370 is insufficient. In an embodiment, the electronic device 101 may identify that the available capacity of the first LU 370 is less than or equal to a specified capacity.

In an embodiment, the electronic device 101 may identify that an available capacity of the second LU 380 is sufficient. In an embodiment, the electronic device 101 may identify that the available capacity of the second LU 380 exceeds a specified capacity. In an embodiment, the specified capacity for the first LU 370 and the specified capacity for the second LU 380 may be identical or may be different.

In an embodiment, the electronic device 101 may allocate, to the first LU 370, a memory area corresponding to a partial capacity among the available capacity of the second LU 380. In an embodiment, the electronic device 101 may allocate, to the first LU 370, the memory area corresponding to the partial capacity among the available capacity of the second LU 380 based on the available capacity of each of the first LU 370 and the second LU 380.

Referring to FIG. 4D, the electronic device 101 may allocate a partial memory area 436 among the memory area 433 allocated to the second LU 380 to the first LU 370. In an embodiment, the electronic device 101 may allocate a partial memory area 437 among the entire memory area 431 of the memory unit 390 to the second LU 380, and allocate remaining partial memory areas 432 and 436 to the first LU 370.

In an embodiment, the electronic device 101 may set a logical address space 426 corresponding to the memory area 436 not allocated to the second LU 380 among the entire memory area 431 to an unused (or, unusable) state. In an embodiment, the electronic device 101 may change the logical address space 426 corresponding to the partial memory area 436 allocated to the first LU 370 from a usable state to the unused (or, unusable) state. In an embodiment, the electronic device 101 may set a logical address space 427 corresponding to the memory area 437 allocated to the second LU 380 among the entire memory area 431 to the usable state. In an embodiment, the electronic device 101 may set logical address spaces 412 and 416 corresponding to the memory areas 432 and 436 allocated to the first LU 370 among the entire memory area 431 to the usable state. In an embodiment, the electronic device 101 may change the logical address space 416 corresponding to the partial memory area 436 allocated to the first LU 370 from the unused (or, unusable) state to the usable state. In an embodiment, the electronic device 101 may maintain a logical address space 417 corresponding to the memory area 437 allocated to the second LU 380 among the entire memory area 431 in the unused (or, unusable) state.

According to an embodiment, in a case that a capacity of the memory area 433 allocated to the second LU 380 is a minimum guaranteed capacity, the electronic device 101 may not allocate a memory area corresponding to the partial capacity among the available capacity of the second LU 380 to the first LU 370. In an embodiment, in a case that the capacity of the memory area 433 allocated to the second LU 380 is the minimum guaranteed capacity, an allocation of a memory capacity from the second LU 380 to the first LU 370 may not be performed.

As described above, the electronic device 101 may adjust a capacity between LUs having different performance to the memory unit 390 in order to efficiently operate the memory unit 390 of a storage device 205 using a file system 310. Accordingly, the electronic device 101 may provide a storage environment having improved responsiveness to a user.

Hereinafter, with reference to FIG. 4E, an example in which the electronic device 101 generates a third LU 385 through a partial memory area among the memory area allocated to the first LU 370 will be described.

FIG. 4E illustrates an example in which an electronic device 101 generates a third LU 385 through a partial memory area among a memory area allocated to a first LU 370. FIG. 4E may be described with reference to FIG. 1, FIG. 2, FIG. 3, FIG. 4A, and FIG. 4B.

In an embodiment, the electronic device 101 may generate a second LU 380 and the third LU 385 other than the first LU 370. In an embodiment, the electronic device 101 may generate the second LU 380 and the third LU 385 based on a generation request of the second LU 380 and the third LU 385 from an application (e.g., an application 146 of FIG. 1). In an embodiment, the generation request of the second LU 380 and the third LU 385 may be obtained through a UI displayed through a display (e.g., a display module 160 of FIG. 1). In an embodiment, the generation request of the second LU 380 and the third LU 385 may include information indicating performance (e.g., high performance) of the second LU 380 and the third LU 385 to be generated. In an embodiment, the generation request of the second LU 380 and the third LU 385 may include information indicating a capacity of the second LU 380 and the third LU 385 to be generated. In an embodiment, the capacity of the second LU 380 and the third LU 385 to be generated may be less than or equal to a maximum capacity of a memory unit 390. The generation request of the second LU 380 and the third LU 385 may include a first generation request of the second LU 380 and a second generation request of the third LU 385. In an embodiment, the first generation request and the second generation request may be generated at different time points. For example, the second generation request may be generated after the second LU 380 is generated according to the first generation request. However, it is not limited thereto. In an embodiment, the first LU 370 may be illustrated as operating as TLC, the second LU 380 may be illustrated as operating as MLC, and the third LU 385 may be illustrated as operating as SLC.

Referring to FIG. 4E, the electronic device 101 may allocate a partial memory area 438 among an entire memory area 431 of the memory unit 390 to the second LU 380. In an embodiment, the electronic device 101 may allocate a partial memory area 439 among the entire memory area 431 of the memory unit 390 to the third LU 385. In an embodiment, the electronic device 101 may allocate a partial memory area 432 among the entire memory area 431 of the memory unit 390 to the first LU 370, allocate the partial memory area 438 to the second LU 380, and allocate a remaining partial memory area 439 to the third LU 385.

In an embodiment, an electronic device 101 may set a logical address space 413 corresponding to a memory area 433 not allocated to the first LU 370 among the entire memory area 431 to an unused (or, unusable) state. In an embodiment, the electronic device 101 may set a logical address space 412 corresponding to the memory area 432 allocated to the first LU 370 among the entire memory area 431 to a usable state.

In an embodiment, the electronic device 101 may set a logical address space 426 corresponding to the memory area 438 allocated to the second LU 380 among the entire memory area 431 to the usable state. In an embodiment, the electronic device 101 may set a logical address space 449 corresponding to the memory area 439 allocated to the third LU 390 among the entire memory area 431 to the usable state.

As described above, the electronic device 101 may generate LUs corresponding to each of cell levels to the memory unit 390 in order to efficiently operate the memory unit 390 of a storage device 205 using a file system 310. In addition, the electronic device 101 may adjust a capacity between LUs corresponding to each of cell levels. Accordingly, the electronic device 101 may provide a storage environment having improved responsiveness to a user.

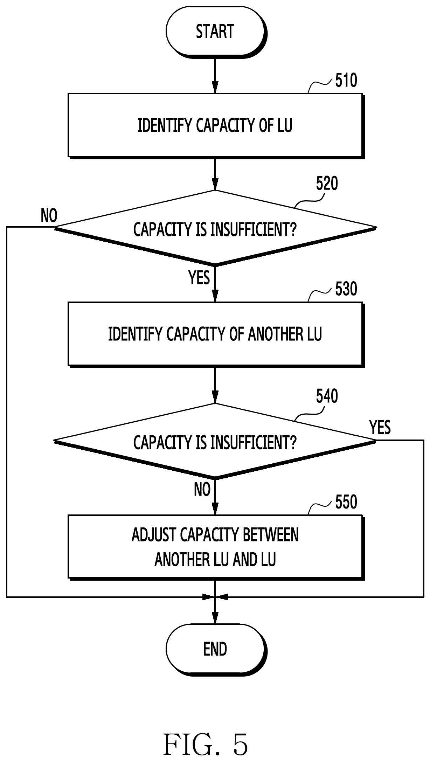

FIG. 5 is a flowchart illustrating an operation of an electronic device 101 according to an embodiment.

FIG. 5 may be described with reference to FIG. 1, FIG. 2, FIG. 3, FIG. 4A, FIG. 4B, FIG. 4C, FIG. 4D, and FIG. 4E.

In an embodiment, an operation of FIG. 5 may be performed at idle time. In an embodiment, the operation of FIG. 5 may be executed in a background. In an embodiment, when files not accessed for a long time in a high performance partition (e.g., a second LU 380) are equal to or greater than a specified amount or when data are stored in an entire capacity of a memory unit 390 equal to or greater than a specified amount, the electronic device 101 may decrease a capacity of the high performance partition and increase a capacity of a normal performance partition, through a file system 310. In an embodiment, in a case that a free space in the entire capacity of the memory unit 390 is sufficient through the file system 310, the electronic device 101 may decrease the capacity of the normal performance partition and allocate an additional capacity to the high performance partition.

Referring to FIG. 5, in operation 510, the electronic device 101 may identify a capacity of an LU (e.g., a first LU 370). In an embodiment, the electronic device 101 may identify an available capacity among an entire capacity of a memory area allocated to the LU. In an embodiment, the LU may be one of the LUs 370, 380, and 385 of FIG. 3.

In operation 520, the electronic device 101 may determine whether a capacity is insufficient. In an embodiment, the electronic device 101 may determine whether an available capacity of the LU is insufficient.

In an embodiment, in a case that the available capacity of the LU is less than or equal to a specified capacity, the electronic device 101 may determine that the capacity is insufficient. In an embodiment, in a case that the available capacity of the LU exceeds the specified capacity, the electronic device 101 may determine that the capacity is not insufficient.

In an embodiment, in a case that it is determined that the capacity is insufficient, the electronic device 101 may perform operation 530. In an embodiment, in a case that it is determined that the capacity is not insufficient, the electronic device 101 may terminate the operation of FIG. 5.

In the operation 530, the electronic device 101 may identify a capacity of another LU (e.g., the second LU 380). In an embodiment, the electronic device 101 may identify an available capacity among an entire capacity of a memory area allocated to the another LU. In an embodiment, the another LU may be another one of the LUs 370, 380, and 385 of FIG. 3.

In operation 540, the electronic device 101 may determine whether a capacity is sufficient. In an embodiment, the electronic device 101 may determine whether an available capacity of the another LU is sufficient.

In an embodiment, in a case that the available capacity of the another LU is equal to or greater than another specified capacity, the electronic device 101 may determine that the capacity is sufficient. In an embodiment, in a case that the another available capacity of the another LU is less than the another specified capacity, the electronic device 101 may determine that the capacity is not sufficient.

In an embodiment, in a case that it is determined that the capacity is sufficient, the electronic device 101 may perform operation 550. In an embodiment, in a case that it is not determined that the capacity is not sufficient, the electronic device 101 may terminate the operation of FIG. 5.

In the operation 550, the electronic device 101 may adjust a capacity between the another LU and the LU. In an embodiment, the electronic device 101 may allocate a partial memory area among the memory area allocated to the another LU to the LU.

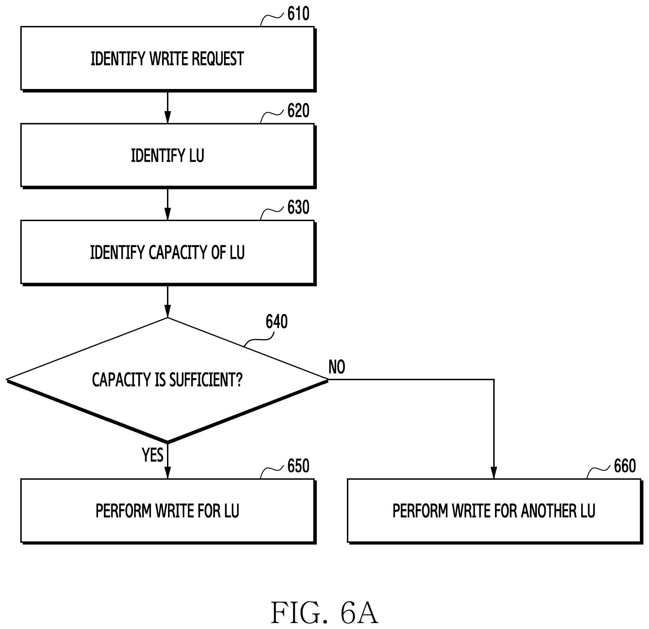

FIG. 6A is a flowchart illustrating an operation of an electronic device 101 according to an embodiment.

FIG. 6A may be described with reference to FIG. 1, FIG. 2, FIG. 3, FIG. 4A, FIG. 4B, FIG. 4C, FIG. 4D, and FIG. 4E.

Referring to FIG. 6A, in operation 610, the electronic device 101 may identify a write request. In an embodiment, the electronic device 101 may obtain a write request from an application (e.g., the application 146 of FIG. 1). In an embodiment, the electronic device 101 may obtain the write request generated based on an API.

In operation 620, the electronic device 101 may identify an LU. In an embodiment, based on that the LU is specified in the write request, the electronic device 101 may identify the specified LU. In an embodiment, based on that the LU is not specified in the write request, the electronic device 101 may identify the LU based on a priority of a file (or, data) requested to be written.

In operation 630, the electronic device 101 may identify a capacity of the LU. In an embodiment, the electronic device 101 may identify an available capacity among an entire capacity of a memory area allocated to the identified LU.

In operation 640, the electronic device 101 may determine whether the capacity is sufficient. In an embodiment, the electronic device 101 may determine whether the available capacity of the identified LU is sufficient.

In an embodiment, in a case that the available capacity of the identified LU is equal to or greater than a specified capacity, the electronic device 101 may determine that the capacity is sufficient. In an embodiment, in a case that the available capacity of the identified LU is less than the specified capacity, the electronic device 101 may determine that the capacity is not sufficient.

In an embodiment, in a case that it is determined that the capacity is sufficient, the electronic device 101 may perform operation 650. In an embodiment, in a case that it is not determined that the capacity is not sufficient, the electronic device 101 may perform operation 660.

In the operation 650, the electronic device 101 may perform a write for the LU. In an embodiment, the electronic device 101 may identify a block to record data among blocks of the LU identified by the write request. In an embodiment, the electronic device 101 may allocate the block to the LU identified by the write request. In an embodiment, the electronic device 101 may record the data in the allocated block. In an embodiment, the block allocated in the LU may be a block next to a most recent block among a memory area of a memory unit 390 allocated to a partition. In an embodiment, the block allocated in the LU may be a block identified according to a sequential write order.

In an embodiment, the electronic device 101 may store data in log areas corresponding to the write request among divided log areas of the LU. For example, in response to the data according to the write request being stored in the first LU 370 and being identified as hot data, the electronic device 101 may store the data according to the write request in a log area for the hot data. For example, in response to the data according to the write request being stored in the first LU 370 and being identified as the hot data, the electronic device 101 may store meta data of the data in a log area for a hot node associated with the hot data. For example, in response to the data according to the write request being identified as being stored in the second LU 380, the electronic device 101 may store the data according to the write request in a log area for data of the second LU 380. For example, in response to the data according to the write request being identified as being stored in the second LU 380, the electronic device 101 may store meta data of the data in a log area for a node associated with the data of the second LU 380.

In the operation 660, the electronic device 101 may perform a write for the another LU. In an embodiment, the electronic device 101 may identify a block to record data among blocks of the another LU identified by the write request. In an embodiment, the electronic device 101 may allocate the block to the another LU identified by the write request. In an embodiment, the electronic device 101 may record the data in the allocated block. In an embodiment, the block allocated in the another LU may be a block next to a most recent block among the memory area of the memory unit 390 allocated to the partition. In an embodiment, the block allocated in the another LU may be a block identified according to a sequential write order.

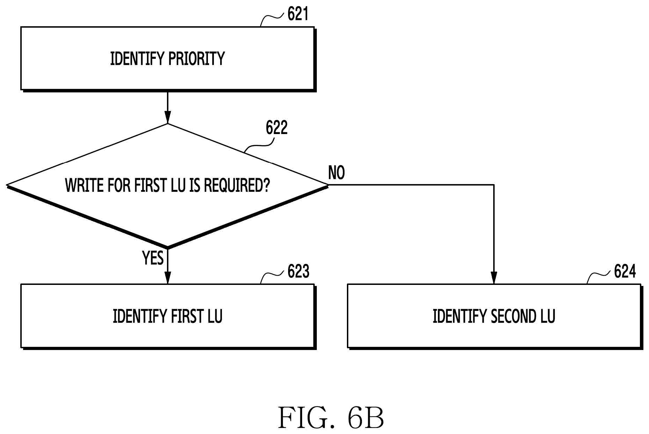

FIG. 6B is a flowchart illustrating an operation of an electronic device 101 according to an embodiment.

FIG. 6B may be described with reference to FIG. 1, FIG. 2, FIG. 3, FIG. 4A, FIG. 4B, FIG. 4C, FIG. 4D, FIG. 4E, and FIG. 6A. Operations 621, 622, 623, and 624 of FIG. 6B may be included in the operation 620 of FIG. 6A.

Referring to FIG. 6B, in the operation 621, the electronic device 101 may identify a priority. In an embodiment, the electronic device 101 may identify a priority of data requested to be written by an application 146. In an embodiment, the electronic device 101 may identify a priority explicitly set by the application 146 for the data requested to be written. In an embodiment, the electronic device 101 may identify a priority according to a type of the data requested to be written, a read frequency of the data, a type (e.g., fsync(), sync()) of a write request of the data, a frequency of a specified write request (e.g., fsync(), sync()), and whether there is atomicity of a transaction.

In an embodiment, the electronic device 101 may identify a priority according to an attribute of the data. In an embodiment, the electronic device 101 may classify the data as hot data, warm data, or cold data according to the attribute of the data. In an embodiment, the electronic device 101 may classify the data as the hot data, the warm data, or the cold data according to an access frequency of the data requested to be written. In an embodiment, the electronic device 101 may classify the data as the hot data, the warm data, or the cold data according to a lifetime of a file of the data requested to be written.

In the operation 622, the electronic device 101 may identify whether a write for a first LU 370 is required.

In an embodiment, the electronic device 101 may identify whether the write for the first LU 370 is required according to the priority explicitly set by the application 146 for the data requested to be written. In an embodiment, the electronic device 101 may identify whether the write for the first LU 370 is required according to a type of the data requested to be written, a read frequency of the data, a type (e.g., fsync(), sync()) of a write request of the data , a frequency of a specified write request (e.g., fsync(), sync()), and whether there is atomicity of a transaction.

In an embodiment, according to the priority of the data requested to be written, in a case that the data requested to be written should be stored in a high performance partition, the electronic device 101 may identify that a write for a second LU 380 is required. In an embodiment, according to the priority of the data requested to be written, in a case that the data requested to be written does not need to be stored in the high performance partition, the electronic device 101 may identify that the write for the first LU 370 is required.

In the operation 622, in a case that the write for the first LU 370 is required, the electronic device 101 may perform the operation 623. In the operation 622, in a case that the write for the first LU 370 is required, the electronic device 101 may perform the operation 623.

In the operation 623, the electronic device 101 may identify the first LU 370.

In the operation 624, the electronic device 101 may identify the second LU 380.

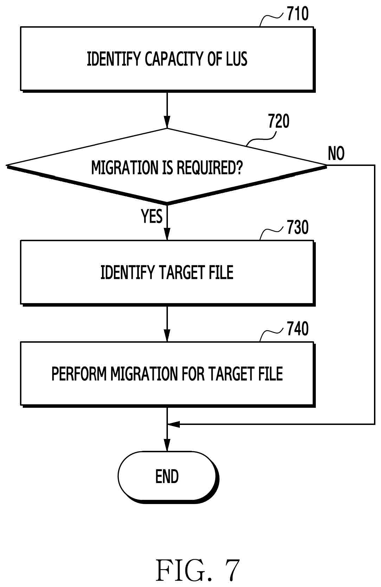

FIG. 7 is a flowchart illustrating an operation of an electronic device 101 according to an embodiment.

FIG. 7 may be described with reference to FIG. 1, FIG. 2, FIG. 3, FIG. 4A, FIG. 4B, FIG. 4C, FIG. 4D, and FIG. 4E. In an embodiment, the operation of FIG. 7 may be executed in a background. In an embodiment, the electronic device 101 may perform migration through a file system 310. In an embodiment, migration for moving a file from a high performance partition (e.g., a second LU 380) to a normal performance partition (e.g., a first LU 370) performed through the file system 310 may follow a scheme of multi device migration. However, the electronic device 101 may not move a highest priority file to the normal performance partition as much as possible, but in a state that only highest priority files are stored in the high performance partition, may move, among the highest priority files, a file having a lowest access frequency (or, a file not accessed for a longest time) to the normal performance partition.

Referring to FIG. 7, in operation 710, the electronic device 101 may identify a capacity of LUs. In an embodiment, the electronic device 101 may identify an available capacity among an entire capacity of a memory area allocated to an LU. In an embodiment, the LU may be one of the LUs 370, 380, and 385 of FIG. 3.

In operation 720, the electronic device 101 may determine whether migration is required. In an embodiment, the electronic device 101 may identify whether the migration is required based on an available capacity of each of LUs 370, 380, and 385.

In an embodiment, in a case that an available capacity of any one of the LUs 370, 380, and 385 is less than or equal to a specified capacity, the electronic device 101 may identify that the migration is required.

In an embodiment, in a case that it is determined that the migration is required, the electronic device 101 may perform operation 730. In an embodiment, in a case that it is determined that the migration is not required, the electronic device 101 may terminate the operation of FIG. 7.

In the operation 730, the electronic device 101 may identify a target file. In an embodiment, the electronic device 101 may identify data to be migrated from an LU having less than or equal to the specified capacity. In an embodiment, the data to be migrated may be selected based on a first priority of data identified through a high performance I/O analyzer 321, and/or a second priority of data identified through a Hot/Cold I/O analyzer 325.

In an embodiment, in a case that the first LU 370 is less than or equal to a specified capacity, the electronic device 101 may identify, among data stored in the first LU 370, data having a highest first priority as data to be migrated. In an embodiment, in a case that the first LU 370 is less than or equal to the specified capacity, the electronic device 101 may identify, among the data stored in the first LU 370, data having a highest access frequency during specified time as the data to be migrated.

In an embodiment, in a case that the second LU 380 is less than or equal to a specified capacity, the electronic device 101 may identify, through a migration manager 329, among data stored in the second LU 380, data having a lowest first priority as data to be migrated. In an embodiment, in a case that the second LU 380 is less than or equal to the specified capacity, the electronic device 101 may identify, among the data stored in the second LU 380, data having a lowest access frequency during specified time as the data to be migrated.

In an embodiment, the electronic device 101 may identify data to be migrated having a size such that an available capacity of an LU less than or equal to a specified capacity becomes equal to or greater than the specified capacity. For example, the electronic device 101 may identify, in the first LU 370, data to be migrated having a size such that an available capacity of the first LU 370 becomes equal to or greater than the specified capacity. For example, the electronic device 101 may identify, in the second LU 380, data to be migrated having a size such that an available capacity of the second LU 380 becomes equal to or greater than the specified capacity.

In operation 740, the electronic device 101 may perform migration for the target file. In an embodiment, the migration may refer to storing, in an LU exceeding the specified capacity, a file stored in an LU less than or equal to the specified capacity among the LUs 370, 380, and 385. In an embodiment, the migration may include deleting the file stored in the LU less than or equal to the specified capacity among the LUs 370, 380, and 385.

As described above, an electronic device 101 may comprise a processor 120. The electronic device 101 may comprise a storage device 205 including a non-volatile memory area 390. The electronic device 101 may comprise memory storing a file system 310 for managing the non-volatile memory area 390 into a first partition 370 and a second partition 380, and instructions. The first partition 370 may be allocated to a first memory area 432 having a first capacity among the non-volatile memory area 390, and the second partition 380 may be allocated to a second memory area 433 having a second capacity among the non-volatile memory area 390. The instructions may be configured, when executed by the processor 120, to cause the electronic device 101 to identify an available capacity from the first memory area 432 allocated to the first partition 370. The instructions may be configured to, when executed by the processor 120, may cause the electronic device 101 to, based on that the available capacity is greater than or equal to a specified capacity, allocate a partial memory area 435 corresponding to a partial capacity of the available capacity among the first memory area 432 to the second partition 380 through the file system 310. A capacity of the partial memory area 435 allocated to the second partition 380 may be reduced by a ratio of a second cell level of the second memory area 433 to a first cell level of the first memory area 432.

As described above, an electronic device 101 may comprise a processor 120. The electronic device 101 may comprise a storage device 205 including a non-volatile memory area 390. The electronic device 101 may comprise memory storing a file system 310 for managing the non-volatile memory area 390 into a first partition 370 and a second partition 380, and instructions. The first partition 370 may be allocated to a first memory area 432 having a first capacity among the non-volatile memory area 390, and the second partition 380 may be allocated to a second memory area 433 having a second capacity among the non-volatile memory area 390. The instructions may be configured, when executed by the processor 120, to cause the electronic device 101 to identify an available capacity from the first memory area allocated to the first partition. The instructions may be configured, when executed by the processor 120, to cause the electronic device 101 to, based on that the available capacity is greater than or equal to a specified capacity, allocate a partial area from the first memory area to the second partition 380 through the file system. By the allocation, a capacity of the partial area allocated to the second partition may be reduced by a ratio of a second cell level to the first cell level.

The instructions may be configured, when executed by the processor 120, to cause the electronic device 101 to, based on that the available capacity is less than or equal to another specified capacity, allocate another partial area from the second memory area to the first partition through the file system 310. By the allocation, a capacity of the another partial area allocated to the first partition is increased by a ratio of the first cell level to the second cell level.

The instructions may be configured, when executed by the processor 120, to cause the electronic device 101 to cease an allocation of the another partial area 436 to the first partition 370, based on that the another available capacity is a specified guaranteed capacity.

The instructions may be configured, when executed by the processor 120, to cause the electronic device 101 to, through the file system 310, identify a storing request for a file. The instructions may be configured, when executed by the processor 120, to cause the electronic device 101 to, in response to identifying the storing request, identify a partition to store the file, based on a priority of the file.

The instructions may be configured, when executed by the processor 120, to cause the electronic device 101 to, based on that the storing request for the file is associated with data regarding a binary for executing an application, identify that the priority is more than a reference priority. The instructions may be configured, when executed by the processor 120, to cause the electronic device 101 to, based on that the priority is more than the reference priority, identify the second partition 380 as the partition to store the file.

The instructions may be configured, when executed by the processor 120, to cause the electronic device 101 to, based on that the storing request for the file is associated with fsync, identify that the priority is more than a reference priority. The instructions may be configured, when executed by the processor 120, to cause the electronic device 101 to, based on that the priority is more than the reference priority, identify the second partition 380 as the partition to store the file.

The instructions may be configured, when executed by the processor 120, to cause the electronic device 101 to store the file in the identified partition based on that an available capacity of the identified partition is larger than a size of the file. The instructions may be configured, when executed by the processor 120, to cause the electronic device 101 to store the file in another partition different from the identified partition based on that the available capacity of the identified partition is less than the size of the file.

The instructions may be configured, when executed by the processor 120, to cause the electronic device 101 to migrate some of data stored in the identified partition to the another partition different from the identified partition, based on that the available capacity of the identified partition is less than a size of the file. The instructions may be configured, when executed by the processor 120, to cause the electronic device 101 to store the file in the identified partition in response to some of data being migrated.

The instructions may be configured, when executed by the processor 120, to cause the electronic device 101 to allocate a part of a memory area allocated to another partition different from the identified partition to the identified partition, based on that the available capacity of the identified partition is less than a size of the file. The instructions may be configured, when executed by the processor 120, to cause the electronic device 101 to store the file in the identified partition based on that the part of the memory area is allocated to the identified partition.

The file system 310 may be a log structured file system. The number of logs for storing data in the first memory area 432 of the first partition 370 may be greater than the number of logs for storing data stored in the second memory area 433 of the second partition 380.

The data stored in the first memory area 432 of the first partition 370 may be divided into hot data or cold data.

As described above, a method may be executed by an electronic device 101 including memory 130 including a storage device 205 including a non-volatile memory area 390, and storing a file system 310 for managing the non-volatile memory area 390 into a first partition 370 and a second partition 380. The method may comprise identifying an available capacity from first memory area allocated to the first partition. The method may comprise, based on that the available capacity is greater than or equal to a specified capacity, allocating, a partial memory area 435 corresponding to a partial capacity of the available capacity among the first memory area 432 to the second partition 380 through the file system 310. A capacity of the partial memory area 435 allocated to the second partition 380 may be reduced by a ratio of a second cell level of the second memory area 433 to a first cell level of the first memory area 432.

As described above, a method may be executed by an electronic device 101 including memory 130 including a storage device 205 including a non-volatile memory area 390, and storing a file system 310 for managing the non-volatile memory area 390 into a first partition 370 and a second partition 380. The method may comprise identifying an available capacity in a first memory area allocated to the first partition among the plurality of partitions. The method may comprise, based on that the available capacity is greater than or equal to a specified capacity, allocating a partial area from the first memory area to the second partition among the plurality of partitions through the file system. By the allocation, a capacity of the partial area allocated to the second partition may be reduced by a ratio of a second cell level to the first cell level.

The method may comprise, based on that the available capacity is less than or equal to another specified capacity, allocating another partial area from the second memory area to the first partition through the file system 310. By the allocation, a capacity of the another partial area allocated to the first partition is increased by a ratio of the first cell level to the second cell level.

The method may comprise ceasing an allocation of the another partial area 436 to the first partition 370, based on that the another available capacity is a specified guaranteed capacity.

The method may comprise, through the file system 310, identifying a storing request for a file. The method may comprise, in response to identifying the storing request, identifying a partition to store the file, based on a priority of the file.

The method may comprise, based on that the storing request for the file is associated with data regarding a binary for executing an application, identifying that the priority is more than a reference priority. The method may comprise, based on that the priority is more than the reference priority, identifying the second partition as the partition to store the file.

The method may comprise, based on that the storing request for the file is associated with fsync, identifying that the priority is more than a reference priority. The method may comprise, based on that the priority is more than the reference priority, identifying the second partition 380 as the partition to store the file.

The method may comprise storing the file in the identified partition based on that an available capacity of the identified partition is larger than a size of the file. The method may comprise storing the file in another partition different from the identified partition based on that the available capacity of the identified partition is less than the size of the file.

The method may comprise migrating some of data stored in the identified partition to the another partition different from the identified partition, based on that the available capacity of the identified partition is less than the size of the file. The method may comprise storing the file in the identified partition in response to that some of data is migrated.

The method may comprise allocating a part of a memory area allocated to another partition different from the identified partition to the identified partition, based on that the available capacity of the identified partition is less than a size of the file. The method may comprise storing the file in the identified partition based on that the part of the memory area is allocated to the identified partition.

The file system 310 may be a log structured file system. The number of logs for storing data in the first memory area 432 of the first partition 370 may be greater than the number of logs for storing data stored in the second memory area 433 of the second partition 380.

The data stored in the first memory area 432 of the first partition 370 may be divided into hot data or cold data.

As described above, a non-transitory computer readable storage medium may store a program including instructions. The instructions may be configured, when executed by a processor

(120) of an electronic device (101) including memory (130) including a storage device (205) including a non-volatile memory area (390), and storing a file system (310) for managing the nonvolatile memory area (390) into a first partition (370) and a second partition (380), to cause the electronic device (101) to: identify an available capacity from first memory area (432) allocated to the first partition. The instructions may be configured, when executed by the processor (120), to cause the electronic device (101) to: based on that the available capacity is greater than or equal to a specified capacity, allocate a partial area from the first memory area to the second partition through the file system. A capacity of the partial area allocated to the second partition may be reduced by a ratio of a second cell level of the second memory area (433) to a first cell level of the first memory area (432).

As described above, a non-transitory computer readable storage medium may store a program including instructions. The instructions may be configured, when executed by a processor (120) of an electronic device (101) including memory (130) including a storage device (205) including a non-volatile memory area (390), and storing a file system (310) for managing the nonvolatile memory area (390) into a first partition (370) and a second partition (380), to cause the electronic device (101) to: identify an available capacity from first memory area (432) allocated to the first partition, and based on that the available capacity is greater than or equal to a specified capacity, allocate a partial area from the first memory area to the second partition through the file system. A capacity of the partial area allocated to the second partition may be reduced by a ratio of a second cell level of the second memory area to a first cell level of the first memory area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a processor (120), and
memory (130) including a storage device (205) including a non-volatile memory area (390), and storing a file system (310) for managing the non-volatile memory area (390) into a first partition (370) and a second partition (380), and instructions,
wherein the first partition (370) is allocated to a first memory area (432) having a first capacity among the non-volatile memory area (390), and the second partition (380) is allocated to a second memory area (433) having a second capacity among the non-volatile memory area (390), and
wherein the instructions are configured, when executed by the processor (120), to cause the electronic device (101) to:
identify an available capacity from the first memory area allocated to the first partition, and
based on that the available capacity is greater than or equal to a specified capacity, allocate a partial area from the first memory area to the second partition through the file system (310),
wherein a capacity of the partial area allocated to the second partition is reduced by a ratio of a second cell level to a first cell level.

2. The electronic device of claim 1,
wherein the instructions are configured, when executed by the processor, to cause the electronic device to:
based on that the available capacity is less than or equal to another specified capacity, allocate another partial area from the second memory area to the first partition through the file system,
wherein a capacity of the another partial area allocated to the first partition is increased by a ratio of the first cell level to the second cell level.

3. The electronic device of claim 2,
wherein the instructions are configured, when executed by the processor, to cause the electronic device to:
cease an allocation of the another partial area to the first partition, based on that the another available capacity is a specified guaranteed capacity.

4. The electronic device of any one of claims 1 to 3,
wherein the instructions are configured, when executed by the processor, to cause the electronic device to:
through the file system, identify a storing request for a file,
in response to identifying the storing request, identify a partition to store the file, based on a priority of the file.

5. The electronic device of claim 4,
wherein the instructions are configured, when executed by the processor, to cause the electronic device to:
based on that the storing request for the file is associated with data regarding a binary for executing an application, identify that the priority is more than a reference priority, and
based on that the priority is more than the reference priority, identify the second partition as the partition to store the file.

6. The electronic device of claim 4,
wherein the instructions are configured, when executed by the processor, to cause the electronic device to:
based on that the storing request for the file is associated with fsync, identify that the priority is more than a reference priority, and
based on that the priority is more than the reference priority, identify the second partition as the partition to store the file.

7. The electronic device of claim 4,
wherein the instructions are configured, when executed by the processor, to cause the electronic device to:
store the file in the identified partition based on that an available capacity of the identified partition is larger than a size of the file,
store the file in another partition different from the identified partition based on that the available capacity of the identified partition is less than the size of the file.

8. The electronic device of claim 4,
wherein the instructions are configured, when executed by the processor, to cause the electronic device to:
migrate some of data stored in the identified partition to the another partition different from the identified partition, based on that the available capacity of the identified partition is less than a size of the file,
store the file in the identified partition based on that some of data is migrated.

9. The electronic device of claim 4,
wherein the instructions are configured, when executed by the processor, to cause the electronic device to:
allocate a part of a memory area allocated to another partition different from the identified partition to the identified partition, based on that the available capacity of the identified partition is less than a size of the file,
store the file in the identified partition based on that the part of the memory area is allocated to the identified partition.

10. The electronic device of claim 4,
wherein the file system is a log-write type file system, and
wherein the number of logs for storing data in the first memory area of the first partition is greater than the number of logs for storing data stored in the second memory area of the second partition.

11. The electronic device of claim 10,
wherein the data stored in the first memory area of the first partition is divided into hot data or cold data.

12. A method executed by an electronic device (101) including memory (130) including a storage device (205) including a non-volatile memory area (390), and storing a file system (310) for managing the non-volatile memory area (390) into a first partition (370) and a second partition (380), comprising,
identifying an available capacity from first memory area allocated to the first partition, and
based on that the available capacity is greater than or equal to a specified capacity, allocating a partial area from the first memory area to the second partition through the file system,
wherein a capacity of the partial area allocated to the second partition is reduced by a ratio of a second cell level of the second memory area (433) to a first cell level of the first memory area (432).

13. The method of claim 12, comprising:
based on that the available capacity is less than or equal to another specified capacity, allocating another partial area from the second memory area to the first partition through the file system,
wherein a capacity of the another partial area allocated to the first partition is increased by a ratio of the first cell level to the second cell level.

14. The method of claim 13, comprising:
ceasing an allocation of the another partial area to the first partition, based on that the another available capacity is a specified guaranteed capacity.

15. A non-transitory computer readable storage medium, storing
a program including instructions,
wherein the instructions are configured, when executed by a processor (120) of an electronic device (101) including memory (130) including a storage device (205) including a nonvolatile memory area (390), and storing a file system (310) for managing the non-volatile memory area (390) into a first partition (370) and a second partition (380), to cause the electronic device (101) to:
identify an available capacity from first memory area (432) allocated to the first partition, and
based on that the available capacity is greater than or equal to a specified capacity, allocate a partial area from the first memory area to the second partition through the file system,
wherein a capacity of the partial area allocated to the second partition is reduced by a ratio of a second cell level of the second memory area (433) to a first cell level of the first memory area (432).
